# EUROPEAN PATENT SPECIFICATION

(11) **EP 3 408 720 B1**
(45) Date of publication and mention of the grant of the patent: **22.01.2020**
(21) Application number: 17705678.5
(22) Date of filing: 26.01.2017
(51) Int. Cl.: B63H 25/42, G05D 1/02

(54) **AUTONOMOUS OPERATION OF A VESSEL**
AUTONOMER BETRIEB EINES SCHIFFES
FONCTIONNEMENT AUTONOME D'UN NAVIRE

(30) Priority: 29.01.2016 FI 20165061
(43) Date of publication of application: 05.12.2018
(73) Proprietor: Kongsberg Maritime Finland Oy, 26100 Rauma (FI)
(72) Inventor: JOKIOINEN, Esa Antti, 20900 Turku (FI); SKOGVOLD, Morten, 6002 Ålesund (NO); POIKONEN, Jonne Kalevi, 21530 Paimio (FI); HYVÖNEN, Mika Petri, 33710 Tampere (FI); KOLU, Antti Juhani, 33230 Tampere (FI)
(74) Representative: Papula Oy
(86) International application number: PCT/FI2017/050044
(87) International publication number: WO 2017/129863

(56) References cited:
- WO-A2-2008/067151
- US-A1- 2005 216 181
- US-A1- 2011 166 836
- US-A1- 2012 265 380
- WITOLD KAZIMIERSKI ET AL: "Analysis of Graph Searching Algorithms for Route Planning in Inland Navigation", TRANSNAV, THE INTERNATIONAL JOURNAL ON MARINE NAVIGATION AND SAFETY OF SEA TRANSPORTATION, vol. 9, no. 2, 1 June 2015 (2015-06-01), pages 281-286, XP055367340, ISSN: 2083-6473, DOI: 10.12716/1001.09.02.17

## Description

### BACKGROUND OF THE INVENTION:

### Field of the Invention:

The invention relates to surface watercraft. In particular, the invention relates to autonomous operation of a vessel.

### Description of the Related Art:

Dynamic positioning (DP) is known. It involves automatic or semi-automatic control of a vessel's position and heading by using its own propellers and thrusters with respect to one or more position references. Typically, the intention is to keep the vessel's position fixed within given parameters. DP is utilized e.g. in offshore drilling operations.

Autopilots are also known. The autopilot (also known as self-steering gear) is an automatic device or system that guides or maintains a vessel's chosen course so that constant 'hands-on' control by a human operator is not required.

Automatic radar plotting aid (ARPA) is also known. ARPA can be utilized in calculating a tracked object's course, speed and closest point of approach to detect if there is a danger of collision with another ship or landmass, for example.

Prior art further includes US 2012/0265380 A1 which discloses systems and methods for operating autonomous waterborne vessels in a safe manner. The systems include hardware for identifying the locations and motions of other vessels, as well as the locations of stationary objects that represent navigation hazards.

Prior art further includes Witold Kazimierski et al: "Analysis of Graph Searching Algorithms for Route Planning in Inland Navigation", TRANSNAV, THE INTERNATIONAL JOURNAL ON MARINE NAVIGATION AND SAFETY OF SEA TRANSPORTATION, vol. 9, no. 2, 1 June 2015 (2015-06-01), pages 281-286, XP055367340, ISSN: 2083-6473, DOI: 10.12716/1001.09.02.17 which discloses utilizing graph search for route planning.

### SUMMARY OF THE INVENTION:

An embodiment of an autonomous operation unit for a vessel comprises a voyage planning module that is configured to generate route plan data for the vessel based on received information related to a route planned for the vessel. The autonomous operation unit further comprises a monitoring module that is configured to monitor the surroundings of the vessel to detect objects not included in the generated route plan data, and to generate corresponding obstacles data. The autonomous operation unit further comprises a collision avoidance module that is configured to receive the generated route plan data and obstacles data; to determine if any obstacles require a change in any of current route parameters of the vessel, and if yes, to change the current route parameters of the vessel accordingly; and to generate routing instructions.

An embodiment of a method of autonomous operation for a vessel comprises generating route plan data for the vessel based on received information related to a route planned for the vessel; monitoring the surroundings of the vessel to detect objects not included in the generated route plan data; generating corresponding obstacles data; determining, based on the generated route plan data and obstacles data, if any obstacles require a change in any of current route parameters of the vessel, and if yes, changing the current route parameters of the vessel accordingly; and generating routing instructions.

An embodiment of a computer program comprises a set of instructions which are configured to cause a computer to perform the steps of the method of autonomous operation for the vessel when executed.

In an embodiment, alternatively or in addition to the above described embodiments, the voyage planning module is further configured to generate the route plan data by utilizing at least one of graph search or a sampling based search algorithm.

In an embodiment, alternatively or in addition to the above described embodiments, the generated route plan data comprises at least one of waypoints or parametric curves.

In an embodiment, alternatively or in addition to the above described embodiments, the voyage planning module is further configured to update the route plan data in response to changes in the route planned for the vessel.

In an embodiment, alternatively or in addition to the above described embodiments, the monitoring module is further configured to monitor the surroundings of the vessel by receiving information from at least one of radar devices, image capture devices, vibration capture devices or audio capture devices of the vessel.

In an embodiment, alternatively or in addition to the above described embodiments, the monitoring module is further configured to monitor at least one of vessel pose data, vessel movement data or weather data.

In an embodiment, alternatively or in addition to the above described embodiments, the monitoring module is further configured to at least one of classify or identify detected objects.

In an embodiment, alternatively or in addition to the above described embodiments, the route parameters of the vessel comprise at least one of route offset or speed of the vessel.

In an embodiment, alternatively or in addition to the above described embodiments, the collision avoidance module is further configured to generate the routing instructions for use by a control computer of the vessel.

In an embodiment, alternatively or in addition to the above described embodiments, the collision avoidance module is further configured to utilize international regulations for preventing collisions at sea (colregs).

In an embodiment, alternatively or in addition to the above described embodiments, the collision avoidance module is further configured to utilize at least one of neuro-fuzzy (H∞), virtual field force (VFF), heuristic search (A*, D*), probabilistic and evolutional (GAMMA, HPA*), or velocity obstacle (VO) computer algorithms.

In an embodiment, alternatively or in addition to the above described embodiments, the generated routing instructions comprise one of: no change in routing instructions, evade instructions, replan instructions or stop instructions.

It is to be understood that the embodiments of the invention described above may be used in any combination with each other. Several of the embodiments may be combined together to form a further embodiment of the invention. An autonomous operation unit, a method, or a computer program may comprise at least one of the embodiments of the invention described above.

The invention allows autonomous or unmanned operation of a vessel while also allowing a remote operator to supervise and confirm autonomously performed operations. Furthermore, the invention allows the remote operator to take manual control of the vessel if required.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
**Fig. 1** is an example block diagram of an autonomous operation unit for a vessel in accordance with an example embodiment;
**Fig. 2** is an example block diagram of a vessel incorporating an autonomous operation unit in accordance with an example embodiment;
**Fig. 3** illustrates an example block diagram of an electronic apparatus capable of implementing example embodiments described herein; and
**Fig**. **4** is an example flow diagram of a method of autonomous operation for a vessel in accordance with an example embodiment.

Like reference numerals are used to designate like parts in the accompanying drawings.

### DETAILED DESCRIPTION OF THE INVENTION:

Reference will now be made in detail to the embodiments of the present invention, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

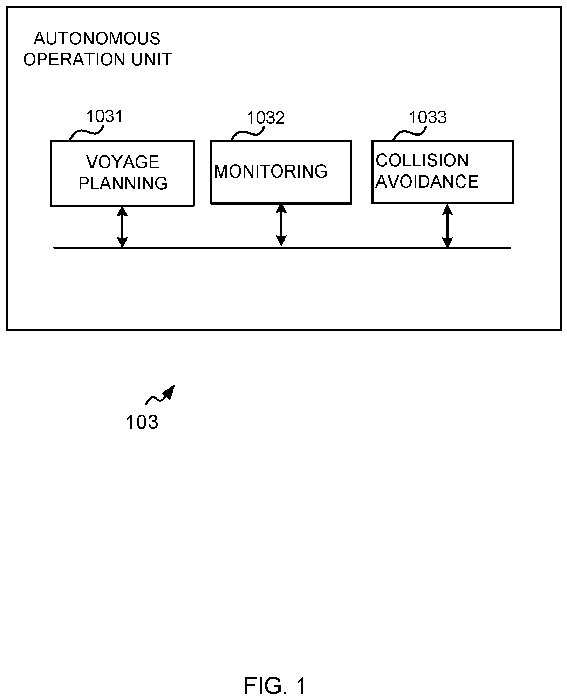

FIG. 1 illustrates an autonomous operation unit 103 for a vessel 200 in accordance with an example embodiment. It should be noted that at least some of the elements described below may not be mandatory and thus some may be omitted in certain embodiments.

The autonomous operation unit 103 comprises a voyage planning module 1031 that is configured to generate route plan data for the vessel 200 based on received information related to a route planned for the vessel 200. The voyage planning module 1031 may be further configured to update the route plan data in response to changes in the route planned for the vessel 200.

The voyage planning module 1031 may be further configured to generate the route plan data by utilizing at least one of graph search or a sampling based search algorithm, which may include but are not limited to A*, D*, RRT or RRT* computer algorithms. The generated route plan data may comprise at least one of waypoints or parametric curves.

The autonomous operation unit 103 further comprises a monitoring module 1032 that is configured to monitor the surroundings of the vessel 200 to detect objects not included in the generated route plan data. The monitoring module 1032 is further configured to generate corresponding obstacles data. The monitoring module 1032 may be further configured to at least one of classify or identify detected objects.

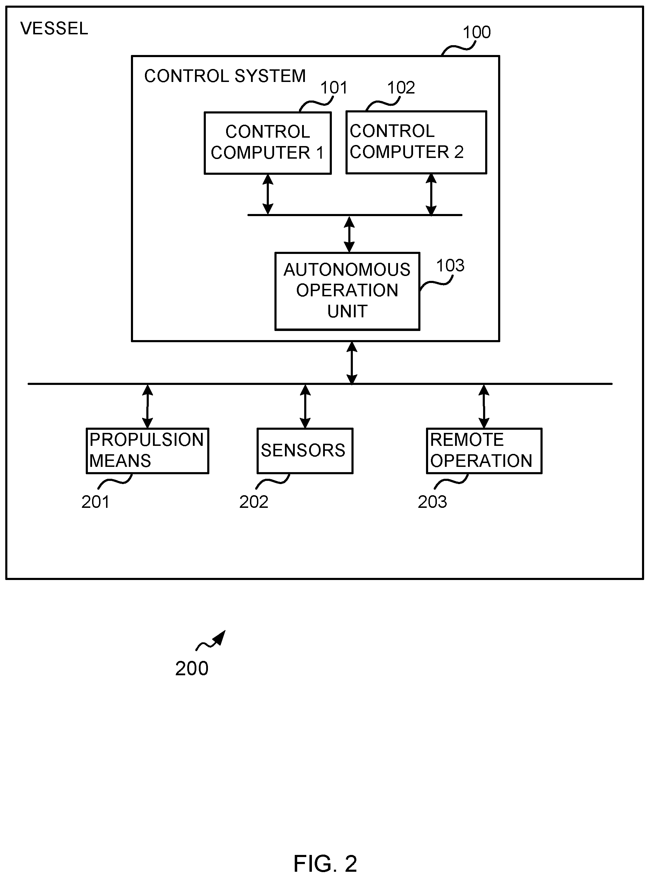

The monitoring module 1032 may be further configured to monitor the surroundings of the vessel 200 by receiving information from at least one of radar devices, image capture devices, vibration capture devices or audio capture devices of the vessel 200. The radar devices, image capture devices, vibration capture devices and/or audio capture devices of the vessel 200 may comprise e.g. one or more sensors of different modalities, such as monocular or stereo cameras (e.g. visible light, near/short-wave infrared, thermal long-wave infrared, hyperspectral), radars operating at different wavelengths, laser scanners (LIDAR), sonars or passive audio capture devices, sound sensors, vibration sensors, inertial navigation system (INS) sensors, and the like. The monitoring module 1032 may be further configured to monitor at least one of vessel pose data, vessel movement data, map data or weather data. At least some of the radar devices, image capture devices, vibration capture devices or audio capture devices of the vessel 200 may be included in the sensors 202 of Figure 2.

The monitoring module 1032 may process and analyze the data from various sensor inputs and combine either the raw data or separate analysis results from multiple sensors (i.e. sensor fusion) in order to increase the accuracy and reliability of detecting and tracking potential objects and obstacles in the vessel's surroundings (local object map). The monitoring module 1032 may take into account the current environmental conditions and system state (e.g. weather, time of day, direction of sun, blocked or faulty sensors) to adjust analysis algorithms for best possible performance and to emphasize sensor types which can provide the most robust information. The monitoring module 1032 may include automatic classification and identification of the detected objects, for example based on region-of-interest image data. In near-shore or docking (i.e. mooring) operations, the monitoring module 1032 may perform vessel pose estimation (accurate localization) by comparing e.g. known real-world marker locations extracted from sensor data to an existing three-dimensional (3D) model of the vessel's environment. The monitoring module 1032 may also segment and reduce large flow of raw output data from sensor sources such as cameras, in order alleviate off-ship communication bandwidth requirements when sensor information is to be transferred e.g. to a shore control center for human decision making or for remote control of the vessel.

The autonomous operation unit 103 further comprises a collision avoidance module 1033 that is configured to receive the generated route plan data and obstacles data. The collision avoidance module 1033 is further configured to determine if any obstacles require a change in any of current route parameters of the vessel, and if yes, to change the current route parameters of the vessel 200 accordingly. The route parameters of the vessel may comprise e.g. route offset and/or speed of the vessel 200. Evasive actions are done by route offset or by replanning. In the route offset the entire route is moved e.g. x meters to one side for a limited period of time, and in the replanning nearest waypoints are recalculated and replaced, to avoid an obstacle in the route.

The collision avoidance module 1033 is further configured to generate routing instructions. The collision avoidance module 1033 may be further configured to generate the routing instructions for use by a control computer of the vessel 200. The generated routing instructions may comprise e.g. no change in routing instructions, evade instructions, replan instructions or stop instructions.

The collision avoidance module 1033 may be further configured to utilize international regulations for preventing collisions at sea (colregs). The collision avoidance module 1033 may be further configured to utilize at least one of various algorithms which may include but are not limited to neuro-fuzzy (H∞), virtual field force (VFF), heuristic search (A*, D*), probabilistic and evolutional (GAMMA, HPA*), or velocity obstacle (VO) computer algorithms.

In other words, the collision avoidance module 1033 is responsible of reactive real-time collision avoidance maneuvering of the vessel 200. It may communicate with other components of the control system 100 using e.g. NMEA-0183 standard. The collision avoidance module 1033 may utilize COLREGs and collision avoidance assessment including ship type, environment (such as harbor area, open sea etc.) and weather data, as discussed above. It may utilize control confirmation and pose estimation data coming from other components of the control system 100 and sensory information (fused from radar, thermal camera and HD camera data) for collision avoidance maneuvering of the vessel 200, which can be implemented using for example neuro-fuzzy (H∞), Virtual Field Force (VFF), heuristic search (A*, D*), probabilistic and evolutional (GAMMA, HPA*) and/or velocity obstacle (VO) algorithms and techniques, as discussed above.

Output information of the collision avoidance module 1033 may include control data for the vessel 200 transmitted to other components of the control system 100. In a normal mode the control data may comprise only heartbeat type of data, telling the control system 100 that the path execution is ok. In an evade mode, the current path in execution is followed but slightly modified (e.g. by sending continuously velocity, offset and touchdown parameters to the control system 100) by the collision avoidance module 1033 to avoid a collision. In a replan mode, new waypoints may be needed to calculate to avoid collision and this information may be sent to the voyage planning module 1031 and other components of the control system 100. In emergency situations, the control system 100 may be instructed e.g. to stop the vessel immediately based on a feasible maneuvering map provided in real time by the control system 100.

Fig. 2 is an example block diagram of a vessel 200 incorporating the autonomous operation unit 103 in accordance with an example embodiment.

A control system 100 for a vessel comprises a first control computer 101 that is configured to control position, speed, heading and/or course over ground of the vessel 200 by use of propulsion means 201 of the vessel 200. The propulsion means 201 of the vessel 200 may comprise propellers, rudders and/or thrusters. A group of sensors 202 of the vessel 200 may comprise position reference sensors, motion sensors, gyrocompasses and/or environmental sensors.

Herein, a vessel refers to any craft designed for transportation on water that has a propulsive capability provided by one or more engines. Examples of a vessel include but are not limited to a cargo ship and a ferry. The vessel may be any suitable surface vessel, for example a marine vessel. Herein, heading refers to the direction into which a vessel's bow is pointing. Course over ground refers to the direction into which the vessel is actually moving relative to the ground.

The control system 100 further comprises a second control computer 102 that is configured to control the position, speed, heading and/or course over ground of the vessel 200 by use of the propulsion means 201 of the vessel 200. The second control computer 102 overrides the first control computer when the second control computer 102 is active.

The control system 100 further comprises the autonomous operation unit 103 that is configured to generate routing instructions based at least on a received route plan, and to send the generated routing instructions to the first control computer 101, as discussed above in connection with FIG. 1. The autonomous operation unit 103 may further be configured to generate the routing instructions based on sensor data provided by at least a portion of the group of sensors 202 of the vessel 200. Alternatively or additionally, the first control computer 101 and/or the second control computer 102 may further be configured to perform the control of the position, speed, heading and/or course over ground of the vessel based on sensor data provided by at least a portion of the group of sensors 202 of the vessel 200. That is, at least a portion of the sensor data may be provided directly (i.e. bypassing the autonomous operation unit 103) to the first control computer 101 and/or the second control computer 102, and/or a portion of the sensor data may be provided to the autonomous operation unit 103 which may utilize it in the generation of the routing instructions to be sent to the first control computer 101.

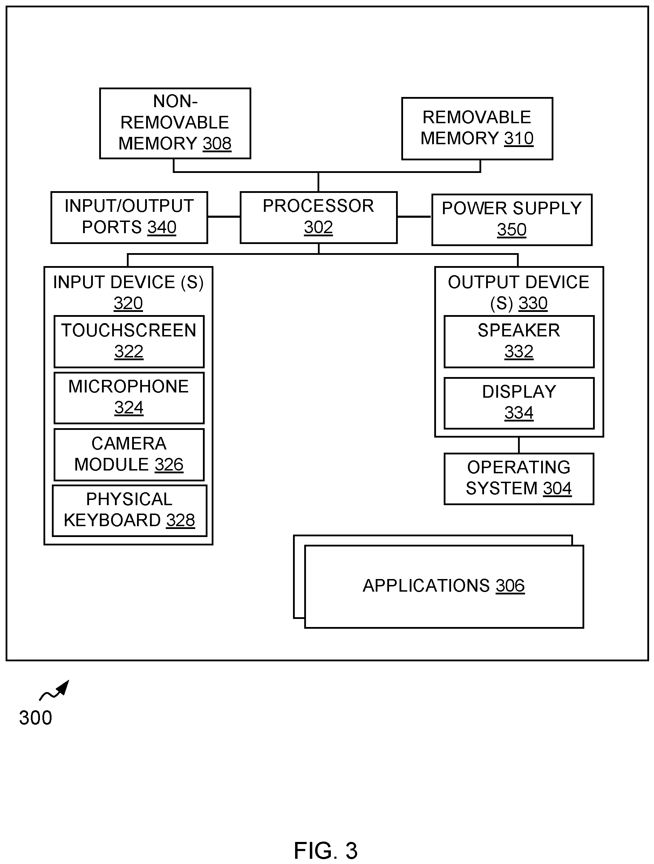

The first control computer 101, the second control computer 102, and/or the autonomous operation unit 103 may be employed, for example, in the electronic apparatus 300 of FIG. 3. However, it should be noted that the first control computer 101, the second control computer 102, and/or the autonomous operation unit 103 may also be employed on a variety of other devices and apparatuses, and therefore, embodiments should not be limited to application on devices and apparatuses such as the electronic device 300 of FIG. 3.

The first control computer 101 is further configured to adjust the control of the position, speed, heading and/or course over ground of the vessel 200 in response to the routing instructions received from the autonomous operation unit 103. The second control computer 102 is further configured to adjust the control of the position, speed, heading and/or course over ground of the vessel 200 in response to remote control instructions received from a remote operation unit 203.

Furthermore the first control computer 101, the second control computer 102, and the autonomous operation unit 103 are arranged onboard (i.e. in or on) the vessel 200.

The first control computer 101 may be further configured to send vessel pose data and/or waypoint map data to the autonomous operation unit 103. The first control computer 101 may send the vessel pose data and/or waypoint map data e.g. periodically. The first control computer 101 may be further configured to send control confirmation data to the autonomous operation unit 103 in response to the received routing instructions.

The autonomous operation unit 103 may be further configured to send status data and/or monitoring data to the remote operation unit 203. The autonomous operation unit 103 may send the status data and/or monitoring data e.g. periodically. The autonomous operation unit 103 may be further configured to receive confirmation instructions from the remote operation unit 203. Here, such confirmation instructions may have been generated in response to the received status data and/or monitoring data. The autonomous operation unit 103 may be further configured to send the generated routing instructions to the first control computer 101 in response to the confirmation instructions received from the remote operation unit 203.

The first control computer 101 and/or the second control computer 102 may be configured to utilize a mathematical model of the vessel 200 in controlling the position and heading of the vessel 200. The mathematical model of the vessel 200 may be used in combination with the sensor data for calculating e.g. required steering angles and propulsion power required to maintain a given position or to follow a predefined track at a given speed.

Even though only one first control computer 101 is illustrated in FIG. 2, more than one first control computers 101 may be provided for redundancy, for example. Similarly, even though only one second control computer 102 is illustrated in FIG. 2, more than one second control computers 102 may be provided for redundancy, for example. Also, even though only one autonomous operation unit 103 is illustrated in FIGS. 1-2, more than one autonomous operation units 103 may be provided and at least some of the more than one autonomous operation units 103 may be cross-connected. Also, the first control computer 101 and the second control computer 102 may be cross-connected to provide additional redundancy. Furthermore, it is to be understood that each of the first control computer 101, the second control computer 102 and the autonomous operation unit 103 may be distributed over more than one physical entity communicatively connected to each other. Furthermore, it is to be understood that the autonomous operation unit 103 may be implemented as software, as hardware, or as a combination of software and hardware.

The remote operation unit 203 may located e.g. in the vessel's navigation bridge. Alternatively, the remote operation unit 203 may be arranged outside the vessel 200, such as in a land-based facility or onboard another vessel. The remote operation unit 203 may be utilized e.g. to supervise and/or confirm autonomously performed operations, and/or to take manual control of the vessel if required.

FIG. 3 is a schematic block diagram of an electronic apparatus or device 300 capable of implementing embodiments of the techniques described herein. It should be understood that the electronic device 300 as illustrated and hereinafter described is merely illustrative of one type of apparatus or an electronic device and should not be taken to limit the scope of the embodiments. As such, it should be appreciated that at least some of the components described below in connection with the electronic device 300 may be optional and thus in an example embodiment may include more, less or different components than those described in connection with the example embodiment of FIG. 3. As such, among other examples, the electronic device 300 could be any computer devices, such as any suitable servers, workstations, personal computers, laptop computers, and the like.

The illustrated electronic device 300 includes a controller or a processor 302 (i.e. - a signal processor, microprocessor, ASIC, or other control and processing logic circuitry) for performing such tasks as signal coding, data processing, input/output processing, power control, and/or other functions. An operating system 304 controls the allocation and usage of the components of the electronic device 300 and support for one or more application programs 306. The application programs 306 can include vessel control and operation related applications, or any other application.

The illustrated electronic device 300 includes one or more memory components, for example, a non-removable memory 308 and/or removable memory 310. The non-removable memory 308 may include RAM, ROM, flash memory, a hard disk, or other well-known memory storage technologies. The non-removable memory 308 and/or removable memory 310 may include the mathematical model of the vessel 200 discussed above. The removable memory 310 may include flash memory (such as one or more removable flash drives) or smart cards. The one or more memory components may be used for storing data and/or code for running the operating system 304 and the applications 306. Example of data may include text, images, sound files, image data, video data, or other data sets to be sent to and/or received from one or more network servers or other devices via one or more wired or wireless networks.

The electronic device 300 can support one or more input devices 320 and one or more output devices 330. Examples of the input devices 320 may include, but are not limited to, a touchscreen 322 (i.e., capable of capturing finger tap inputs, finger gesture inputs, multi-finger tap inputs, multi-finger gesture inputs, or keystroke inputs from a virtual keyboard or keypad), a microphone 324 (i.e., capable of capturing voice input), a camera module 326 (i.e., capable of capturing still picture images and/or video images) and a physical keyboard 328. Examples of the output devices 330 may include, but are not limited to a speaker 332 and a display 334. Other possible output devices (not shown) can include piezoelectric or other haptic output devices. Some devices can serve more than one input/output function. For example, the touchscreen 322 and the display 334 can be combined into a single input/output device.

The electronic device 300 can further include one or more input/output ports 340, and a power supply 350. The illustrated components are not required or all-inclusive, as any of the components shown can be deleted and other components can be added.

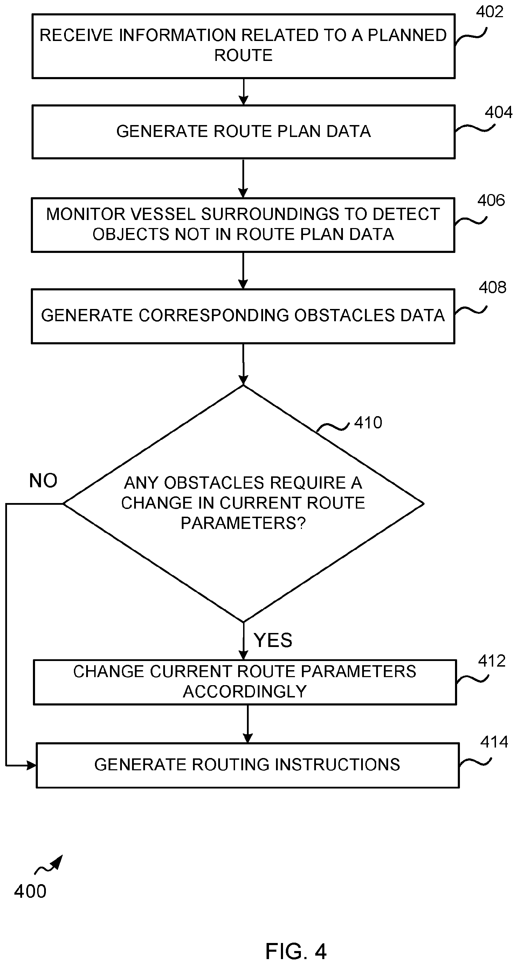

FIG. 4 is an example flow diagram of a method 400 of autonomous operation for a vessel in accordance with an example embodiment.

At step 402, information related to a route planned for the vessel is received. At step 404, route plan data for the vessel is generated based on the received information related to the route planned for the vessel. The generation of the route plan data may comprise utilizing at least one of graph search or a sampling based search algorithm which may include but are not limited to A*, D*, RRT or RRT* computer algorithms. The generated route plan data may comprise at least one of waypoints or parametric curves. The generation of the route plan data may further comprise updating the route plan data in response to changes in the route planned for the vessel.

At step 406, the surroundings of the vessel are monitored to detect objects not included in the generated route plan data. The monitoring of the surroundings of the vessel may comprise receiving information from at least one of radar devices, image capture devices, vibration capture devices or audio capture devices of the vessel. The monitoring of the surroundings of the vessel may further comprise monitoring at least one of vessel pose data, vessel movement data or weather data. The monitoring of the surroundings of the vessel may further comprise classifying and/or identifying detected objects. At step 408, corresponding obstacles data is generated.

At step 410, it is determined, based on the generated route plan data and obstacles data, if any obstacles require a change in any of current route parameters of the vessel. If change(s) are required, the current route parameters of the vessel are changed accordingly, step 412. The route parameters of the vessel may comprise route offset and/or speed of the vessel. At step 414, routing instructions are generated. The generation of the routing instructions may comprise generating the routing instructions for use by a control computer of the vessel. International regulations may be utilized for preventing collisions at sea (colregs) at steps 410-414. At least one of neuro-fuzzy (H∞), virtual field force (VFF), heuristic search (A*, D*), probabilistic and evolutional (GAMMA, HPA*), or velocity obstacle (VO) computer algorithms may be utilized at steps 410-414. The generated routing instructions comprise one of: no change in routing instructions, evade instructions, replan instructions or stop instructions.

The above method may be implemented as computer software which is executed in a computing device able to communicate with other computing devices. When the software is executed in a computing device it is configured to perform the above described inventive method. The software is embodied on a computer readable medium so that it can be provided to the computing device. Steps 402-404 may be performed e.g. by the voyage planning module 1031 of FIG. 1. Steps 406-408 may be performed e.g. by the monitoring module 1032 of FIG. 1. Steps 410-414 may be performed e.g. by the collision avoidance module 1033 of FIG. 1.

The steps of the method described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

The exemplary embodiments can include, for example, any suitable servers, workstations, personal computers, laptop computers, other devices, and the like, capable of performing the processes of the exemplary embodiments. The devices and subsystems of the exemplary embodiments can communicate with each other using any suitable protocol and can be implemented using one or more programmed computer systems or devices.

One or more interface mechanisms can be used with the exemplary embodiments, including, for example, Internet access, telecommunications in any suitable form (e.g., voice, modem, and the like), wireless communications media, and the like. For example, employed communications networks or links can include one or more satellite communications networks, wireless communications networks, cellular communications networks, 3G communications networks, 4G communications networks, Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware and/or software art(s). For example, the functionality of one or more of the components of the exemplary embodiments can be implemented via one or more hardware and/or software devices.

The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

Stored on any one or on a combination of computer readable media, the exemplary embodiments of the present inventions can include software for controlling the components of the exemplary embodiments, for driving the components of the exemplary embodiments, for enabling the components of the exemplary embodiments to interact with a human user, and the like. Such software can include, but is not limited to, device drivers, firmware, operating systems, development tools, applications software, and the like. Such computer readable media further can include the computer program product of an embodiment of the present inventions for performing all or a portion (if processing is distributed) of the processing performed in implementing the inventions. Computer code devices of the exemplary embodiments of the present inventions can include any suitable interpretable or executable code mechanism, including but not limited to scripts, interpretable programs, dynamic link libraries (DLLs), Java classes and applets, complete executable programs, Common Passenger Request Broker Architecture (CORBA) passengers, and the like. Moreover, parts of the processing of the exemplary embodiments of the present inventions can be distributed for better performance, reliability, cost, and the like.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, and the like. Non-volatile media can include, for example, optical or magnetic disks, magneto-optical disks, and the like. Volatile media can include dynamic memories, and the like. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

## Claims

1. An autonomous operation unit (103) for a vessel (200), comprising:
a voyage planning module (1031) configured to generate route plan data for the vessel (200) based on received information related to a route planned for the vessel;
a monitoring module (1032) configured to monitor the surroundings of the vessel to detect objects not included in the generated route plan data, and to generate corresponding obstacles data; and
a collision avoidance module (1033) configured to receive the generated route plan data and obstacles data; to determine if any obstacles require a change in any of current route parameters of the vessel, and if yes, to change the current route parameters of the vessel accordingly; and to generate routing instructions;
**characterized in that**:
the voyage planning module (1031) is further configured to generate the route plan data by utilizing at least a sampling based search algorithm, wherein the generated route plan data comprises parametric curves; and
the collision avoidance module (1033) is further configured to utilize at least one of neuro-fuzzy (H∞), virtual field force (VFF), heuristic search (A*, D*), probabilistic and evolutional (GAMMA, HPA*), or velocity obstacle (VO) computer algorithms.

2. The autonomous operation unit (103) according to claim 1, wherein the generated route plan data further comprises waypoints.

3. The autonomous operation unit (103) according to claim 1 or 2, wherein the voyage planning module (1031) is further configured to update the route plan data in response to changes in the route planned for the vessel.

4. The autonomous operation unit (103) according to any of claims 1 to 3, wherein the monitoring module (1032) is further configured to monitor the surroundings of the vessel by receiving information from at least one of radar devices, image capture devices, vibration capture devices or audio capture devices of the vessel.

5. The autonomous operation unit (103) according to any of claims 1 to 4, wherein the monitoring module (1032) is further configured to monitor at least one of vessel pose data, vessel movement data or weather data.

6. The autonomous operation unit (103) according to any of claims 1 to 5, wherein the monitoring module (1032) is further configured to at least one of classify or identify detected objects.

7. The autonomous operation unit (103) according to any of claims 1 to 6, wherein the route parameters of the vessel comprise at least one of route offset or speed of the vessel.

8. The autonomous operation unit (103) according to any of claims 1 to 7, wherein the collision avoidance module (1033) is further configured to generate the routing instructions for use by a control computer of the vessel.

9. The autonomous operation unit (103) according to any of claims 1 to 8, wherein the collision avoidance module (1033) is further configured to utilize international regulations for preventing collisions at sea (colregs).

10. The autonomous operation unit (103) according to any of claims 1 to 9, wherein the generated routing instructions comprise one of: no change in routing instructions, evade instructions, replan instructions or stop instructions.

11. A method of autonomous operation for a vessel, comprising:
generating (404) route plan data for the vessel based on received information related to a route planned for the vessel;
monitoring (406) the surroundings of the vessel to detect objects not included in the generated route plan data;
generating (408) corresponding obstacles data;
determining (410), based on the generated route plan data and obstacles data, if any obstacles require a change in any of current route parameters of the vessel;
if yes, changing (412) the current route parameters of the vessel accordingly; and
generating (414) routing instructions,
**characterized in that**:
the generation (404) of the route plan data comprises utilizing at least a sampling based search algorithm, wherein the generated route plan data comprises parametric curves; and
at least one of the determination (410) of the need for current route parameter change, the change (412) of the current route parameters, and the generation (414) of the routing instructions comprises utilizing at least one of neuro-fuzzy (H∞), virtual field force (VFF), heuristic search (A*, D*), probabilistic and evolutional (GAMMA, HPA*), or velocity obstacle (VO) computer algorithms.

12. The method according to claim 11, wherein the generated route plan data further comprises waypoints.

13. The method according to claim 11 or 12, wherein the generation of the route plan data comprises updating the route plan data in response to changes in the route planned for the vessel.

14. The method according to any of claims 11 to 13, wherein the monitoring of the surroundings of the vessel comprises receiving information from at least one of radar devices, image capture devices, vibration capture devices or audio capture devices of the vessel.

15. The method according to any of claims 11 to 14, wherein the monitoring of the surroundings of the vessel comprises monitoring at least one of vessel pose data, vessel movement data or weather data.

16. The method according to any of claims 11 to 15, wherein the monitoring of the surroundings of the vessel further comprises at least one of classifying or identifying detected objects.

17. The method according to any of claims 11 to 16, wherein the route parameters of the vessel comprise at least one of route offset or speed of the vessel.

18. The method according to any of claims 11 to 17, wherein the generation of the routing instructions comprises generating the routing instructions for use by a control computer of the vessel.

19. The method according to any of claims 11 to 18, wherein the generated routing instructions comprise one of: no change in routing instructions, evade instructions, replan instructions or stop instructions.

20. A computer program, comprising a set of instructions which are configured to cause a computer to perform the steps of any of claims 11 to 19 when executed.

## Patentansprüche

1. Autonome Betriebseinheit (103) für ein Schiff (200), umfassend:
ein Reiseplanungsmodul (1031), das konfiguriert ist, um Routenplandaten für das Schiff (200) basierend auf empfangenen Informationen in Bezug auf eine für das Schiff geplante Route zu erzeugen;
ein Überwachungsmodul (1032), das konfiguriert ist, um die Umgebung des Schiffs zu überwachen, um Objekte zu erfassen, die nicht in den erzeugten Routenplandaten enthalten sind, und um entsprechende Hindernisdaten zu erzeugen; und
ein Kollisionsvermeidungsmodul (1033), das konfiguriert ist, um die erzeugten Routenplandaten und Hindernisdaten zu empfangen; und um festzustellen, ob etwaige Hindernisse eine Änderung eines der aktuellen Routenparameter des Schiffs erfordern, und wenn ja, um die aktuellen Routenparameter des Schiffs entsprechend zu ändern; und um Routenanweisungen zu erzeugen;
**dadurch gekennzeichnet, dass**:
das Reiseplanungsmodul (1031) ferner konfiguriert ist, um die Routenplandaten unter Verwendung zumindest eines auf Stichproben basierenden Suchalgorithmus zu erzeugen, wobei die erzeugten Routenplandaten parametrische Kurven umfassen; und
das Kollisionsvermeidungsmodul (1033) ferner konfiguriert ist, um zumindest einen Neurofuzzy (Hoo), einen virtuellen Feldkraft (VFF), einen heuristischen-such (A*, D*), einen probabilistischen und evolutionären (GAMMA, HPA*) oder einen Geschwindigkeitshindernis (VO) Computeralgorithmus einzusetzen.

2. Autonome Betriebseinheit (103) nach Anspruch 1, wobei die erzeugten Routenplandaten ferner Wegpunkte umfassen.

3. Autonome Betriebseinheit (103) nach Anspruch 1 oder 2, wobei das Reiseplanungsmodul (1031) ferner konfiguriert ist, um die Routenplandaten als Reaktion auf Änderungen der für das Schiff geplanten Route zu aktualisieren.

4. Autonome Betriebseinheit (103) nach einem der Ansprüche 1 bis 3, wobei das Überwachungsmodul (1032) ferner konfiguriert ist, um die Umgebung des Schiffs zu überwachen, indem es Informationen zumindest von Radarvorrichtungen, Bilderfassungsvorrichtungen, Vibrationserfassungsvorrichtungen oder Audioerfassungsvorrichtungen des Schiffs empfängt.

5. Autonome Betriebseinheit (103) nach einem der Ansprüche 1 bis 4, wobei das Überwachungsmodul (1032) ferner konfiguriert ist, um zumindest Schiffspositionsdaten, Schiffsbewegungsdaten oder Wetterdaten zu überwachen.

6. Autonome Betriebseinheit (103) nach einem der Ansprüche 1 bis 5, wobei das Überwachungsmodul (1032) ferner konfiguriert ist, um zumindest die erfassten Objekte zu klassifizieren oder zu identifizieren.

7. Autonome Betriebseinheit (103) nach einem der Ansprüche 1 bis 6, wobei die Routenparameter des Schiffs zumindest einen Routenversatz oder eine Geschwindigkeit des Schiffs umfassen.

8. Autonome Betriebseinheit (103) nach einem der Ansprüche 1 bis 7, wobei das Kollisionsvermeidungsmodul (1033) ferner konfiguriert ist, um die Routenanweisungen zur Verwendung durch einen Steuercomputer des Schiffes zu erzeugen.

9. Autonome Betriebseinheit (103) nach einem der Ansprüche 1 bis 8, wobei das Kollisionsvermeidungsmodul (1033) ferner konfiguriert ist, um internationale Vorschriften zur Vermeidung von Kollisionen auf See (Colregs) zu nutzen.

10. Autonome Betriebseinheit (103) nach einem der Ansprüche 1 bis 9, wobei die erzeugten Routinganweisungen folgendes umfassen: keine Änderung der Routinganweisungen, Ausweichanweisungen, Neuplananweisungen oder Halteanweisungen.

11. Verfahren zum autonomen Betrieb eines Schiffes, umfassend:
Erzeugen (404) von Routenplandaten für das Schiff basierend auf empfangenen Informationen in Bezug auf eine für das Schiff geplante Route;
Überwachen (406) der Umgebung des Schiffes, um Objekte zu erfassen, die nicht in den erzeugten Routenplandaten enthalten sind;
Erzeugen (408) entsprechender Hindernisdaten;
Bestimmen (410) basierend auf den erzeugten Routenplandaten und den Hindernisdaten, ob etwaige Hindernisse eine Änderung eines der aktuellen Routenparameter des Schiffes erfordern;
wenn ja, Ändern (412) der aktuellen Routenparameter des Schiffes entsprechend; und Erzeugen (414) von Routenanweisungen,
**dadurch gekennzeichnet, dass**:
das Erzeugen (404) der Routenplandaten die Verwendung zumindest eines sampling-basierten Suchalgorithmus umfasst, wobei die erzeugten Routenplandaten parametrische Kurven umfassen; und
zumindest das Bestimmen (410) der Notwendigkeit einer aktuellen Routenparameteränderung, das Ändern (412) der aktuellen Routenparameter und das Erzeugen (414) der Routenanweisungen den Einsatz von zumindest einem Neurofuzzy (Hoo), einem virtuellen Feldkraft (VFF), einem heuristischen-such (A*, D*), einem probabilistischen und evolutionären (GAMMA, HPA*) oder einem Geschwindigkeitshindernis (VO) Computeralgorithmus umfasst.

12. Verfahren nach Anspruch 11, wobei die erzeugten Routenplandaten ferner Wegpunkte umfassen.

13. Verfahren nach Anspruch 11 oder 12, wobei das Erzeugen der Routenplandaten das Aktualisieren der Routenplandaten als Reaktion auf Änderungen der für das Schiff geplanten Route umfasst.

14. Verfahren nach einem der Ansprüche 11 bis 13, wobei das Überwachen der Umgebung des Schiffes das Empfangen von Informationen zumindest von Radarvorrichtungen, Bilderfassungsvorrichtungen, Vibrationserfassungsvorrichtungen oder Audioerfassungsvorrichtungen des Schiffes umfasst.

15. Verfahren nach einem der Ansprüche 11 bis 14, wobei das Überwachen der Umgebung des Schiffes das Überwachen von zumindest der Schiffspositionsdaten, der Schiffsbewegungsdaten oder der Wetterdaten umfasst.

16. Verfahren nach einem der Ansprüche 11 bis 15, wobei die Überwachung der Umgebung des Schiffes ferner zumindest die Klassifizierung oder die Identifizierung von erfassten Objekten umfasst.

17. Verfahren nach einem der Ansprüche 11 bis 16, wobei die Routenparameter des Schiffes zumindest einen Routenversatz oder eine Geschwindigkeit des Schiffes umfassen.

18. Verfahren nach einem der Ansprüche 11 bis 17, wobei das Erzeugen der Routenanweisungen das Erzeugen der Routenanweisungen zur Verwendung durch einen Steuercomputer des Schiffes umfasst.

19. Verfahren nach einem der Ansprüche 11 bis 18, wobei die erzeugten Routenanweisungen umfassen: keine Änderung der Routenanweisungen, Ausweichanweisungen, Neuplananweisungen oder Halteanweisungen.

20. Computerprogramm, umfassend einen Satz von Anweisungen, die konfiguriert sind, um einen Computer zu veranlassen, die Schritte eines der Ansprüche 11 bis 19 bei Ausführung durchzuführen.

## Revendications

1. Unité de fonctionnement autonome (103) pour un navire (200), comprenant :
un module de planification d'itinéraire (1031) configuré pour générer des données de plan de route pour le navire (200) sur la base d'informations reçues relatives à une route prévue pour le navire ;
un module de surveillance (1032) configuré pour surveiller les abords du navire afin de détecter des objets non compris dans les données de plan de route générées, et pour générer des données d'obstacles correspondantes ; et
un module d'évitement de collision (1033) configuré pour recevoir les données de plan de route générées et des données d'obstacle ; pour déterminer si de quelconques obstacles nécessitent une modification de quelconques paramètres de route actuels du navire, et si c'est le cas, pour modifier les paramètres de route actuels du navire en conséquence ; et pour générer des instructions d'acheminement ;
**caractérisé en ce que** :
le module de planification d'itinéraire (1031) est configuré en outre pour générer les données de plan de route en utilisant au moins un algorithme de recherche à base d'échantillonnage, dans laquelle les données de plan de route générées comprennent des courbes paramétriques ; et
le module d'évitement de collision (1033) est configuré en outre pour utiliser au moins un des algorithmes informatiques suivants : neuro-flou (H∞), forces de champs virtuels (VFF), recherche heuristique (A*, D*), probabiliste et évolutif (GAMMA, HPA*), ou obstacle de vitesse (VO).

2. Unité de fonctionnement autonome (103) selon la revendication 1, dans laquelle les données de plan de route générées comprennent en outre des points de cheminement.

3. Unité de fonctionnement autonome (103) selon les revendications 1 ou 2, dans laquelle le module de planification d'itinéraire (1031) est configuré en outre pour mettre à jour les données de plan de route en réponse à des modifications de la route prévue pour le navire.

4. Unité de fonctionnement autonome (103) selon l'une quelconque des revendications 1 à 3, dans laquelle le module de surveillance (1032) est configuré en outre pour surveiller les abords du navire en recevant des informations provenant au moins soit de dispositifs de radar, soit de dispositifs de capture d'images, soit de dispositifs de capture de vibrations, soit de dispositifs de capture audio du navire.

5. Unité de fonctionnement autonome (103) selon l'une quelconque des revendications 1 à 4, dans laquelle le module de surveillance (1032) est configuré en outre pour surveiller au moins soit des données de pose du navire, soit des données de mouvement du navire, soit des données météorologiques.

6. Unité de fonctionnement autonome (103) selon l'une quelconque des revendications 1 à 5, dans laquelle le module de surveillance (1032) est configuré en outre pour au moins soit classer, soit identifier des objets détectés.

7. Unité de fonctionnement autonome (103) selon l'une quelconque des revendications 1 à 6, dans laquelle les paramètres de route du navire comprennent au moins soit un décalage de route, soit une vitesse du navire.

8. Unité de fonctionnement autonome (103) selon l'une quelconque des revendications 1 à 7, dans laquelle le module d'évitement de collision (1033) est configuré en outre pour générer les instructions d'acheminement destinées à être utilisées par un ordinateur de commande du navire.

9. Unité de fonctionnement autonome (103) selon l'une quelconque des revendications 1 à 8, dans laquelle le module d'évitement de collision (1033) est configuré en outre pour utiliser le règlement international pour prévenir les abordages en mer (colregs).

10. Unité de fonctionnement autonome (103) selon l'une quelconque des revendications 1 à 9, dans laquelle les instructions d'acheminement générées comprennent un type d'instructions parmi : des instructions de ne pas modifier la route, des instructions d'évitement, des instructions de replanification, ou des instructions d'arrêt.

11. Procédé de fonctionnement autonome pour un navire, comprenant :
la génération (404) de données de plan de route pour le navire sur la base d'informations reçues relatives à une route prévue pour le navire ;
la surveillance (406) des abords du navire pour détecter des objets non compris dans les données de plan de route générées ;
la génération (408) de données d'obstacles correspondantes ;
la détermination (410), sur la base des données de plan de route générées et de données d'obstacle, si de quelconques obstacles nécessitent une modification de quelconques paramètres de route actuels du navire ;
si c'est le cas, la modification (412) des paramètres de route actuels du navire en conséquence ; et
la génération (414) d'instructions d'acheminement,
**caractérisé en ce que**
la génération (404) des données de plan de route comprend l'utilisation d'au moins un algorithme de recherche à base d'échantillonnage, dans lequel les données de plan de route générées comprennent des courbes paramétriques ; et
au moins soit la détermination (410) du besoin de modification des paramètres de route actuels, soit la modification (412) des paramètres de route actuels, soit la génération (414) des instructions d'acheminement comprend l'utilisation d'au moins un des algorithmes informatiques suivants : neuro-flou (H∞), forces de champs virtuels (VFF), recherche heuristique (A*, D*), probabiliste et évolutif (GAMMA, HPA*), ou obstacle de vitesse (VO).

12. Procédé selon la revendication 11, dans lequel les données de plan de route générées comprennent en outre des points de cheminement.

13. Procédé selon les revendications 11 ou 12, dans lequel la génération des données de plan de route comprend la mise à jour des données de plan de route en réponse à des modifications de la route prévue pour le navire.

14. Procédé selon l'une quelconque des revendications 11 à 13, dans lequel la surveillance des abords du navire comprend la réception d'informations provenant au moins soit de dispositifs de radar, soit de dispositifs de capture d'images, soit de dispositifs de capture de vibrations, soit de dispositifs de capture audio du navire.

15. Procédé selon l'une quelconque des revendications 11 à 14, dans lequel la surveillance des abords du navire comprend la surveillance d'au moins soit des données de pose du navire, soit des données de mouvement du navire, soit des données météorologiques.

16. Procédé selon l'une quelconque des revendications 11 à 15, dans lequel la surveillance des abords du navire comprend en outre au moins soit le classement, soit l'identification des objets détectés.

17. Procédé selon l'une quelconque des revendications 11 à 16, dans lequel les paramètres de route du navire comprennent au moins soit un décalage de route, soit une vitesse du navire.

18. Procédé selon l'une quelconque des revendications 11 à 17, dans lequel la génération des instructions d'acheminement comprend la génération des instructions d'acheminement destinées à être utilisées par un ordinateur de commande du navire.

19. Procédé selon l'une quelconque des revendications 11 à 18, dans lequel les instructions d'acheminement générées comprennent un type d'instructions parmi : des instructions de ne pas modifier la route, des instructions d'évitement, des instructions de replanification, ou des instructions d'arrêt.

20. Programme informatique, comprenant un ensemble d'instructions qui sont configurées pour amener un ordinateur à réaliser les étapes selon l'une quelconque des revendications 11 à 19 lorsqu'elles sont exécutées.
